# EUROPEAN PATENT APPLICATION

(11) **EP 4 653 690 A1**
(43) Date of publication of application: **26.11.2025**
(21) Application number: 25174722.6
(22) Date of filing: 07.05.2025
(51) Int. Cl.: F02M 21/02, F02M 35/10

(54) **GAS FUEL SUPPLY DEVICE FOR ENGINE**

(30) Priority: 14.05.2024 JP 2024078725
(71) Applicant: Nikki Co., Ltd., Atsugi-shi, Kanagawa-ken 243-0801 (JP)
(72) Inventor: KANEKO, Naokazu, Atsugi-shi, 243-0801 (JP); AIZAWA, Shutaro, Atsugi-shi, 243-0801 (JP)
(74) Representative: Boult Wade Tennant LLP

(57) **Abstract**

In an engine system including an exhaust gas recirculating device, occurrence of a malfunction caused by infiltration of condensed water into an intake pipe pressure introduction pipe is prevented.

A gas fuel supply device (100) for an engine, the gas fuel supply device (100) including a fuel cylinder (1), a regulator (2), an intake passage (5) including a throttle (3) and a mixer (4), a fuel pipe (8), an engine (10), and an exhaust gas recirculating device (13) configured to recirculate a part of the exhaust gas as EGR gas to the intake passage (5). The gas fuel supply device (100) further including an intake pressure extraction port (40) formed in the intake passage (5), and a mounting portion (41) formed in a periphery of the intake pressure extraction port (40). In which an intake pressure introduction port (30) is formed on an outer surface of the regulator (2), and the regulator (2) is fixed to the mounting portion (41) by a fixing member (31) while the intake pressure extraction port (40) and the intake pressure introduction port (30) directly and airtightly communicate with each other.

## Description

### Technical Field

The present invention relates to a gas fuel supply device that converts gas fuel stored in a liquid or high-pressure gas state into gas having a predetermined pressure and supplies the gas to an engine. More particularly, the present invention relates to a gas fuel supply device for an engine in which the gas fuel supply device includes a regulator having an intake pressure introduction function.

### Background Art

Conventionally, in a gas fuel supply device that supplies a gas fuel stored in a liquid or high-pressure gas state, such as LPG, CNG or hydrogen gas, to an engine, it is common to supply the gas fuel to the engine after the pressure is reduced to a predetermined pressure using a regulator.

As a structure of the regulator, a piston type regulator that opens and closes a pressure adjusting valve by a piston being displaced in an axial direction to reduce a pressure of gas to a predetermined pressure is known as disclosed in, for example, JP 2013-041375 A (Patent Literature 1) and JP 2019-067216 A (Patent Literature 2).

The conventional example of a piston type regulator has a structure in which a piston partitions a main body into a primary pressure chamber (an introduction side) and a secondary pressure chamber (a discharge side). It also has a pressure adjusting spring that biases the piston toward the secondary pressure chamber is provided in a spring chamber.

Then, the piston is displaced in the axial direction by balance between force of gas pushing the piston toward the primary pressure chamber, in which the gas passed through the pressure adjusting valve and moved from the primary pressure chamber to the secondary pressure chamber, and force of the pressure adjusting spring pushing the piston toward the secondary pressure chamber, and pressure is adjusted by opening and closing the pressure adjusting valve.

A closed spring chamber, a spring chamber that communicates with the atmosphere through a through hole, a spring chamber that fluctuates pressure in the spring chamber by introducing intake pressure, and the like are known as the spring chamber.

As an example of introducing the intake pressure into the regulator, for example, a gas fuel supply device disclosed as a related-art example in JP 2021-191952 A (Patent Literature 3) filed by the present applicant in the past is illustrated in FIG. 6.

The related-art gas fuel supply device is an engine system in which a high-pressure gas fuel filled and stored in a fuel cylinder 1a is reduced in pressure to a predetermined pressure by a regulator 2a and the supplied through a fuel filter 3a, an injector 4a, and a fuel pipe 5a and then supplied from a mixer 7a disposed in an intake passage 6a, and then an intake manifold 8a to supply it to an engine 9a. In the related-art gas fuel supply device, the intake manifold 8a and the regulator 2a are connected to each other by an intake pipe pressure introduction pipe 10a and intake pipe pressure is introduced into the regulator 2a to adjust pressure of the gas fuel to be discharged.

However, when the intake manifold 8a and the regulator 2a are connected to each other by the intake pipe pressure introduction pipe 10a without any measures, there is a problem that moisture such as condensed water generated on the intake passage 6a side infiltrates into the intake pipe pressure introduction pipe 10a from a pressure extraction port 11a so that malfunction occurs in the intake pipe pressure introduction pipe 10a.

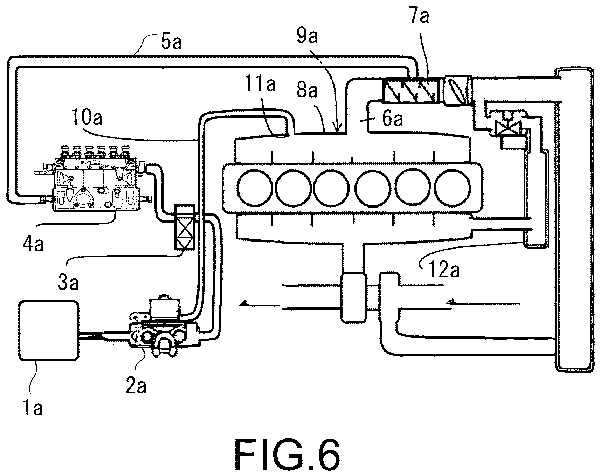

In particular, as in the related-art example illustrated in FIG. 6, in an engine system including an exhaust gas recirculation (EGR) device that recirculates a part of an exhaust gas, it is known that condensed water is likely to be generated in the intake passage 6a because a temperature of EGR gas cooled by an EGR cooler 12a is likely to be equal to or lower than a dew point temperature.

### Citation List

### Patent Literature

Patent Literature 1: JP 2013-041375 A
Patent Literature 2: JP 2019-067216 A
Patent Literature 3: JP 2021-191952 A

### Summary of Invention

### Technical Problem

Therefore, an object of the present invention is to prevent occurrence of a malfunction caused by infiltration of condensed water into an intake pipe pressure introduction pipe in an engine system including an exhaust gas recirculating device.

### Solution to Problem

A gas fuel supply device for an engine according to the present invention made to solve the above-described problems is a gas fuel supply device for an engine including: a fuel cylinder configured to store a gas fuel; a regulator configured to reduce pressure of the gas fuel; an intake passage including a throttle and a mixer in order from an upstream side; a fuel pipe configured to supply the gas fuel passed through the regulator to the mixer; an engine configured to combust an air-fuel mixture supplied through the intake passage in a cylinder and to discharge an exhaust gas from an exhaust passage; and an exhaust gas recirculating device configured to recirculate a part of the exhaust gas as EGR gas from an EGR gas introduction port to the intake passage,
wherein the gas fuel supply device further includes: an intake pressure extraction port formed in the intake passage; and a mounting portion formed in a periphery of the intake pressure extraction port,
wherein an intake pressure introduction port is formed on an outer surface of the regulator, and the regulator is fixed to the mounting portion by a fixing member while the intake pressure extraction port and the intake pressure introduction port directly and airtightly communicate with each other.

According to the present invention, since the intake pressure extraction port of the intake passage and the intake pressure introduction port of the regulator are directly and airtightly connected to each other, the intake pipe pressure introduction pipe of the related-art invention becomes unnecessary.

Accordingly, it is possible not only to prevent occurrence of a malfunction caused by infiltration of moisture into the intake pipe pressure introduction pipe, but also to facilitate increase in the diameter of the intake pressure introduction port as a pipe connection structure is unnecessary.

In the present invention, the intake passage includes an intake manifold that distributes the air-fuel mixture to the cylinder, and when the intake pressure extraction port is formed in the intake manifold, the intake pressure immediately before supplying to each cylinder of the engine can be extracted and used.

In the present invention, when the EGR gas introduction port is formed between the throttle and the mixer and the intake pressure extraction port is formed upstream of the EGR gas introduction port, by extracting the intake pressure from the upstream of the EGR gas introduction port, it is possible to more reliably prevent condensed water derived from the exhaust gas recirculating device from infiltrating into the regulator.

In the present invention, when the intake pressure extraction port is formed upstream of the throttle, by extracting the intake pressure from the upstream of the throttle, it is possible to more reliably prevent the condensed water derived from the exhaust gas recirculating device from infiltrating into the regulator.

### Advantageous Effects of Invention

According to the present invention, in a gas fuel supply device for an engine in which the gas fuel supply device includes a regulator having an intake pressure introduction function, it is possible to prevent malfunction of the intake pressure introduction function due to condensed water or the like.

### Brief Description of Drawings

FIG. 1 is a view illustrating a first embodiment of the present invention;
FIG. 2 is a cross-sectional view illustrating main parts in a periphery of a regulator in the embodiment illustrated in FIG. 1;
FIG. 3 is a perspective view of FIG. 2;
FIG. 4 is a view illustrating a second embodiment of the present invention;
FIG. 5 is a view illustrating a third embodiment of the present invention; and
FIG. 6 is a view illustrating a related-art example.

### Description of Embodiments

Hereinafter, embodiments of the present invention will be described with reference to the drawings.

### <First Embodiment>

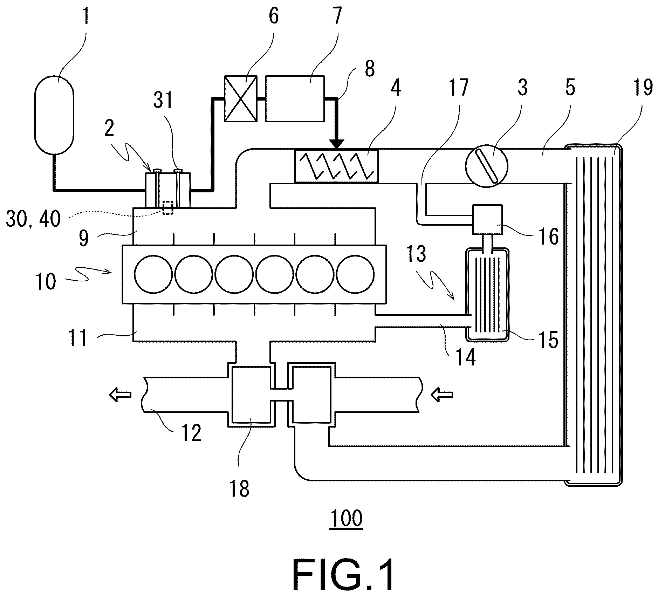

FIG. 1 illustrates a configuration of a gas fuel supply device 100 for an engine according to a first embodiment of the present invention.

The gas fuel supply device 100 for the engine includes a fuel cylinder 1 that stores a gas fuel such as LPG, CNG, or hydrogen gas, a regulator 2 that reduces pressure of a high-pressure gas fuel sent out from the fuel cylinder 1, an intake passage 5 that includes a throttle 3 and a mixer 4 in order from an upstream side, a fuel pipe 8 that supplies the gas fuel passed through the regulator 2 and reduced to a predetermined pressure to the mixer 4 through a fuel filter 6 and an injector 7, an engine 10 connected to an intake manifold 9 and an exhaust manifold 11, and an exhaust gas recirculating device 13.

Air supplied through the throttle 3 and the gas fuel supplied through the fuel pipe 8 are mixed in the mixer 4 to form an air-fuel mixture, and the air-fuel mixture is distributed to each cylinder of the engine 10 by the intake manifold 9, is ignited in each cylinder, and is combusted.

The exhaust gas discharged from each cylinder passes through the exhaust manifold 11 and is discharged to the outside from an exhaust passage 12.

In the present specification, an entire path of an intake system including the intake manifold 9 and reaching the engine 10 is defined as the intake passage 5, and an entire path of an exhaust system including the exhaust manifold 11 and passing through the engine 10 is defined as the exhaust passage 12.

In the present embodiment, the exhaust gas recirculation (EGR) device 13 is provided between the exhaust manifold 11 and the intake passage 5.

The exhaust gas recirculating device 13 includes an EGR pipe 14, an EGR cooler 15, and an EGR valve 16. The exhaust gas recirculating device 13 recirculates a part of the exhaust gas as EGR gas while returning the EGR gas from an EGR gas introduction port 17 to the intake passage 5 side.

The EGR gas introduction port 17 is provided between the throttle 3 and the mixer 4 in the intake passage 5.

In the present embodiment, a turbocharger 18 that compresses suctioned air using a flow of the exhaust gas passing through the exhaust passage 12 side and an intercooler 19 that cools the compressed air are provided.

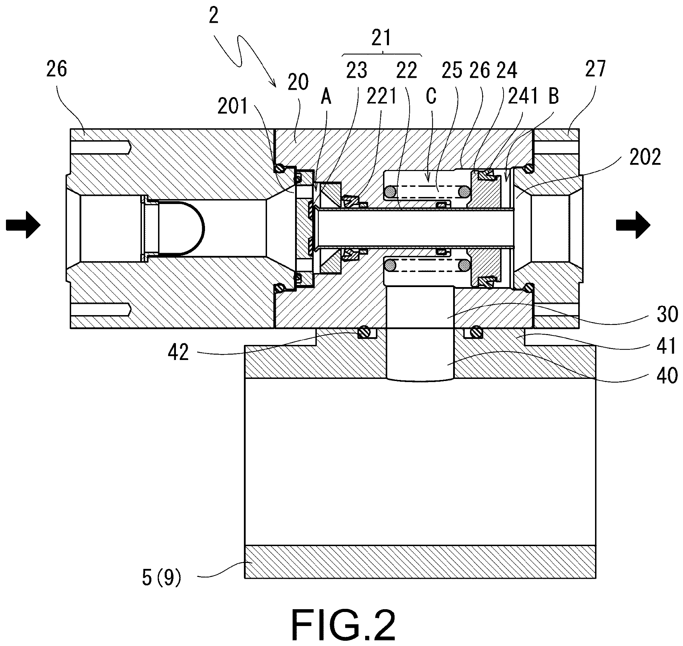

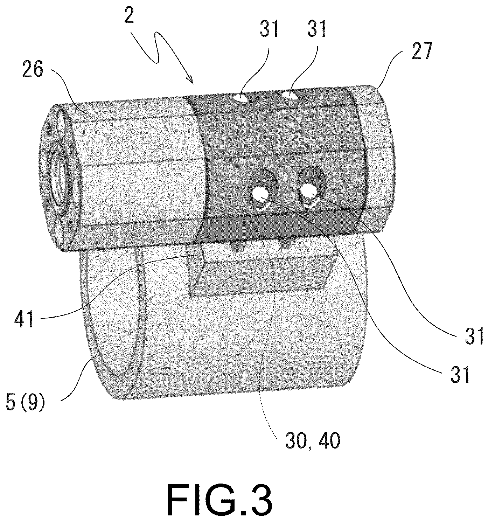

FIG. 2 is a cross-sectional view illustrating main parts in the periphery of the regulator 2 and FIG. 3 is a perspective view of FIG. **2****.** In which the regulator 2 includes a pressure adjusting valve 21 including a tubular valve body 22 and an annular valve seat 23 in a tubular main body 20.

The pressure adjusting valve 21 adjusts an opening amount by changing a distance between the valve body 22 and the valve seat 23, thereby reducing a pressure of the high-pressure gas fuel sent out from the fuel cylinder 1 (in the direction of a black arrow illustrated in the drawing) to a predetermined pressure.

A piston 24 is fixed to the outer periphery of the valve body 22, and the valve body 22 and the piston 24 can be displaced in the axial direction.

The inside of the main body 20 is airtightly partitioned by a seal member 221 in contact with the outer periphery of the valve body 22 and a seal member 241 in contact with the outer periphery of the piston 24. The inside of the main body 20 includes a primary pressure chamber A on an introduction port 201 side, a secondary pressure chamber B on a discharge port 202 side, and a spring chamber C located in the middle of the chambers A and B.

The spring chamber C includes the piston 24 and a pressure adjusting spring 25 that biases the piston 24 in the secondary pressure chamber B direction.

The regulator 2 includes an inlet cover 26 attached to the introduction port 201 and an outlet cover 27 attached to the discharge port 202.

An intake pressure introduction port 30 is formed on the outer surface of the main body 20, the intake pressure introduction port 30 having an intake pressure introduction function of introducing an intake pressure as a pressure in the intake passage 5 into the spring chamber C from the intake pressure introduction port 30.

In the present embodiment, an intake pressure extraction port 40 is formed on the outer surface of the intake manifold 9, and a mounting portion 41 having a plurality of screw holes is formed in the periphery of the intake pressure extraction port 40.

An O-ring seal member 42 is disposed in the periphery of the intake pressure extraction port 40.

A feature of the present invention is that the regulator 2 is fixed to the mounting portion 41 by a fixing member 31 that is a fixing screw while the intake pressure extraction port 40 and the intake pressure introduction port 30 directly and airtightly communicate with each other.

Hereinafter, a pressure regulation function of the regulator in the present embodiment will be described.

Gas fuel introduced from the fuel cylinder 1 into the primary pressure chamber A passes through the valve body 22 and moves to the secondary pressure chamber B. In which the valve body 22 is in a valve open state by default due biasing force of the pressure adjusting spring 25 disposed in the spring chamber C.

When a pressure in the secondary pressure chamber B increases by the gas fuel that moved to the secondary pressure chamber B, the piston 24 is pushed downward in the primary pressure chamber A direction against the force of the pressure adjusting spring 25 biasing the piston 24 in the secondary pressure chamber B direction.

Then, the intake pressure in the intake passage 5 introduced from the intake pressure introduction port 30 through the intake pressure extraction port 40 is introduced into the spring chamber C so that the pressure in the spring chamber C fluctuates and the fluctuation acts on the piston 24.

As described above, the piston 24 is displaced in the axial direction by balance between the force of the pressure adjusting spring 25 pushing the piston 24 toward the secondary pressure chamber B, the force of the gas fuel pushing the piston 24 toward the primary pressure chamber A in which the gas fuel passed through the pressure adjusting valve 21 and moved from the primary pressure chamber A to the secondary pressure chamber B, and the pressure in the spring chamber C fluctuated by the introduced intake pressure, and the pressure adjusting valve 21 is opened and closed to adjust the pressure.

According to the present embodiment, since the intake pressure extraction port 40 and the intake pressure introduction port 30 are directly and airtightly connected to each other, the intake pipe pressure introduction pipe in the related-art invention becomes unnecessary.

Accordingly, it is possible not only to prevent the occurrence of a malfunction caused by infiltration of moisture into the intake pipe pressure introduction pipe, but also to facilitate increase in the diameter of the intake pressure introduction port 30 as a pipe connection structure is unnecessary.

As an advantage of increasing the diameter of the intake pressure introduction port 30, improvement of response in introduction of the intake pressure can be expected, and even if condensed water adheres to the inner peripheral surface of the intake pressure introduction port 30, there is no concern about malfunction of the intake pressure introduction function as the diameter of the intake pipe pressure introduction pipe is larger than that of the related-art example.

### <Second Embodiment>

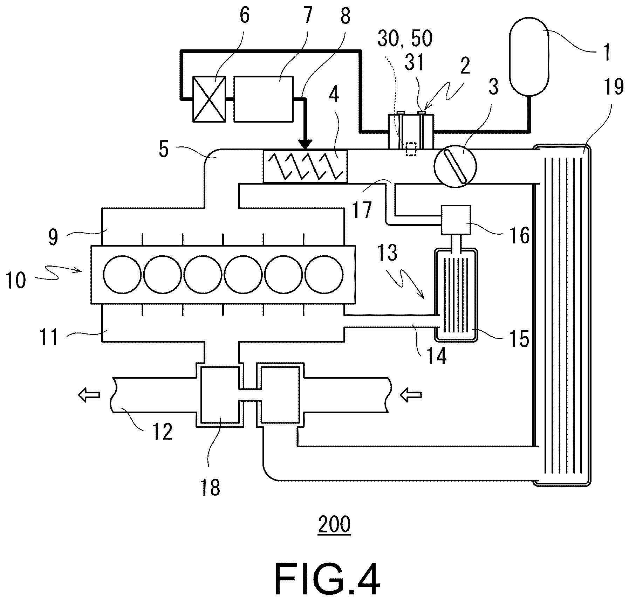

FIG. 4 illustrates a gas fuel supply device 200 for an engine according to a second embodiment of the present invention. The gas fuel supply device 200 is basically similar to that of the gas fuel supply device 100 of the first embodiment illustrated in FIG. 1 and the same structures will be denoted by the same reference numerals. The second embodiment is different from the first embodiment in that an intake pressure extraction port 50 is formed at a position upstream of the EGR gas introduction port 17 and downstream of the throttle 3 in the intake passage 5.

In the present embodiment, the intake pressure extraction port 50 is formed on the outer surface of the intake passage 5 disposed upstream of the intake manifold 9. Similarly to the mounting portion 41 in FIG. 2 formed in the periphery of the intake pressure extraction port 40 and having a plurality of screw holes, the mounting portion 41 having a plurality of screw holes is formed in the periphery of the intake pressure extraction port 50, and the O-ring seal member 42 is disposed in the periphery of the intake pressure extraction port 50.

The regulator 2 is fixed to the mounting portion 41 by the fixing member 31 that is a fixing screw while the intake pressure extraction port 50 formed in the intake passage 5 and the intake pressure introduction port 30 of the regulator 2 directly and airtightly communicate with each other.

The EGR gas containing moisture sent out from the exhaust gas recirculating device 13 moves from the EGR gas introduction port 17 toward the engine 10 on the downstream side. Therefore, by forming the intake pressure extraction port 50 at the position upstream of the EGR gas introduction port 17, it is possible to prevent the infiltration of the condensed water from the intake pressure extraction port 50.

### <Third Embodiment>

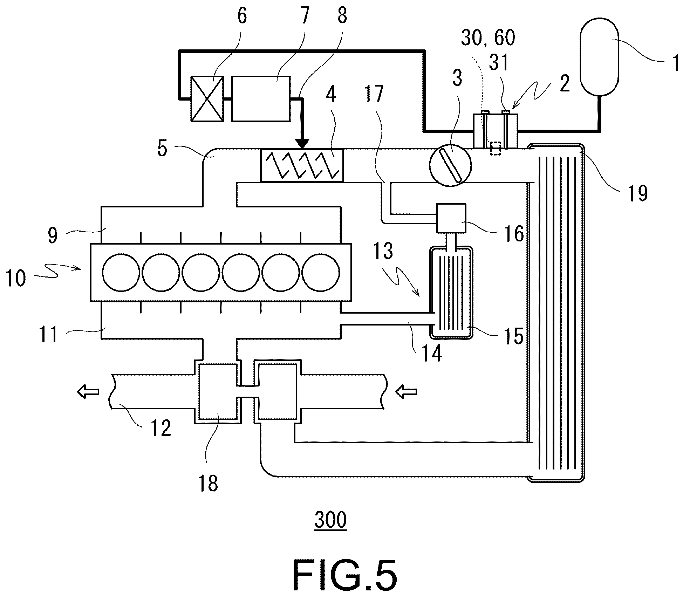

FIG. 5 illustrates a gas fuel supply device 300 for an engine according to a third embodiment of the present invention. The gas fuel supply device 300 is basically similar to that of the gas fuel supply device 100 of the first embodiment illustrated in FIG. 1 and the same structures will be denoted by the same reference numerals. The third embodiment is different from the first embodiment in that an intake pressure extraction port 60 is formed at a position upstream of the EGR gas introduction port 17 and upstream of the throttle 3 in the intake passage 5.

In the present embodiment, the intake pressure extraction port 60 is formed on the outer surface of the intake passage 5 disposed upstream of the intake manifold 9. Similarly to the mounting portion 41 in FIG. 2 formed in the periphery of the intake pressure extraction port 40 and having a plurality of screw holes, the mounting portion 41 having a plurality of screw holes is formed in the periphery of the intake pressure extraction port 60, and the O-ring seal member 42 is disposed in the periphery of the intake pressure extraction port 60.

The regulator 2 is fixed to the mounting portion 41 by the fixing member 31 that is a fixing screw while the intake pressure extraction port 60 formed in the intake passage 5 and the intake pressure introduction port 30 of the regulator 2 directly and airtightly communicate with each other.

The EGR gas containing moisture sent out from the exhaust gas recirculating device 13 moves from the EGR gas introduction port 17 toward the engine 10 on the downstream side. Therefore, by forming the intake pressure extraction port 60 at the position upstream of the EGR gas introduction port 17 and so that the throttle 3 is sandwiched between the intake pressure extraction port 60 and the EGR gas introduction port 17, it is possible to prevent the infiltration of the condensed water from the intake pressure extraction port 60 more reliably.

Since the first to third embodiments described herein are engine systems each including a turbocharger, an intake pressure in an intake passage moves back and forth between a negative pressure, an atmospheric pressure, and a positive pressure depending on an operation state of the turbocharger.

Meanwhile, in a natural intake engine system not including a turbocharger, the intake pressure in the intake passage moves back and forth between the negative pressure and the atmospheric pressure due to, for example, an influence of intake air pulsation.

Even if the intake pressure fluctuates, in the present invention in which the intake pressure extraction port formed in the intake passage and the intake pressure introduction port formed in the regulator are directly and airtightly connected to each other, the intake pressure introduction function in the intake passage is exerted and the intake pipe pressure introduction pipe as in the related-art invention is unnecessary, thereby facilitating an increase in the diameter of the intake pressure introduction port while avoiding malfunction of the intake pressure introduction function due to condensed water or the like.

Note that, although the first to third embodiments described in the present specification are engine systems each including a turbocharger, the present invention can be implemented even in a natural intake engine system not including a turbocharger.

### Reference Signs List

- 1: Fuel cylinder
- 2: Regulator
- 3: Throttle
- 4: Mixer
- 5: Intake passage
- 6: Fuel filter
- 7: Injector
- 8: Fuel pipe
- 9: Intake manifold
- 10: Engine
- 11: Exhaust manifold
- 12: Exhaust passage
- 13: Exhaust gas recirculating device
- 14: EGR pipe
- 15: EGR cooler
- 16: EGR valve
- 17: EGR gas introduction port
- 18: Turbocharger
- 19: Intercooler
- 20: Main body
- 201: Introduction port
- 202: Discharge port
- 21: Pressure adjusting valve
- 22: Valve body
- 221: Seal member
- 23: Valve seat
- 24: Piston
- 241: Seal member
- 25: Pressure adjusting spring
- 26: Inlet cover
- 27: Outlet cover
- 30: Intake pressure introduction port
- 31: Fixing member
- 40: Intake pressure extraction port
- 41: Mounting portion
- 42: Seal member
- 50: Intake pressure extraction port
- 60: Intake pressure extraction port
- 100: Gas fuel supply device for engine
- 200: Gas fuel supply device for engine
- 300: Gas fuel supply device for engine
- A: Primary pressure chamber
- B: Secondary pressure chamber
- C: Spring chamber

## Claims

1. A gas fuel supply device (100, 200, 300) for an engine (10), comprising:
a fuel cylinder (1) configured to store a gas fuel;
a regulator (2) configured to reduce pressure of the gas fuel;
an intake passage (5) including a throttle (3) and a mixer (4) disposed in order from an upstream side;
a fuel pipe (8) configured to supply the gas fuel passed through the regulator (2) to the mixer (4);
the engine (10) configured to combust an air-fuel mixture supplied through the intake passage (5) in a cylinder and to discharge an exhaust gas from an exhaust passage (12); and
an exhaust gas recirculating device (13) configured to recirculate a part of the exhaust gas as EGR gas from an EGR gas introduction port (17) to the intake passage (5),
wherein the gas fuel supply device (100, 200, 300) further comprising:
an intake pressure extraction port (40) formed in the intake passage (5); and
a mounting portion (41) formed in a periphery of the intake pressure extraction port (40);
wherein an intake pressure introduction port (30) is formed on an outer surface of the regulator (2), and
the regulator (2) is fixed to the mounting portion (41) by a fixing member (31) while the intake pressure extraction port (40) and the intake pressure introduction port (30) directly and airtightly communicate with each other.

2. The gas fuel supply device (100) according to claim 1,
wherein the intake passage (5) includes an intake manifold (9) that distributes the air-fuel mixture to the cylinder, and
the intake pressure extraction port (40) is formed in the intake manifold (9).

3. The gas fuel supply device (200, 300) according to claim 1,
wherein the EGR gas introduction port (17) is formed between the throttle (3) and the mixer (4), and
the intake pressure extraction port (50) is formed upstream of the EGR gas introduction port (17).

4. The gas fuel supply device (300) according to claim 3,
wherein the intake pressure extraction port (60) is formed upstream of the throttle (3).
